# EUROPÄISCHE PATENTANMELDUNG

(11) **EP 1 439 512 A1**
(43) Veröffentlichungstag der Anmeldung: **21.07.2004**
(21) Anmeldenummer: 03000994.8
(22) Anmeldetag: 17.01.2003
(51) Int. Cl.: G09B 9/02, A63G 31/16

(54) **Bewegungssimulator**

(71) Anmelder: Krause, Detlef, 53557 Bad Hönningen (DE)
(72) Erfinder: Krause, Detlef, 53557 Bad Hönningen (DE)
(74) Vertreter: Grommes, Karl F., Dr.

(57) **Zusammenfassung**

Die Erfindung betrifft einen Bewegungssimulator mit einer zur Aufnahme von Personen bestimmten Kapsel (4), umfassend ein vertikal angeordnetes Ringelement (12), welches über eine in einem Umfangsbereich dieses Ringelementes (12) angeordnete erste Drehantriebslagerung (14) gelagert und um die Ringachse (x―Achse) drehantreibbar ist, und eine dem Ringelement (12) zugeordnete zweite Drehantriebslagerung (40), über die die Kapsel (4) in dem Ringelement (12) um eine zur Ringachse rechtwinklige, in der Ringebene liegende Achse (y-Achse) drehbar gelagert und drehantreibbar ist. Gemäß der vorliegenden Erfindung ist die zweite Drehantriebslagerung (40) durch zwei an der Innenseite des Ringelementes (12) diametral einander gegenüberliegende, ringseitige Schwenklagerelemente (16, 18) sowie zwei mit diesen zusammenwirkende, an der Außenseite der Kapsel (4) angeordnete kapselseitige Schwenklagerelemente (8, 10) gebildet.

## Beschreibung

### Technisches Gebiet

Die Erfindung betrifft einen Bewegungssimulator der im Oberbegriff des Anspruches 1 genannten Art.

Bewegungssimulatoren dienen ganz allgemein dazu, Bewegungen von Fahrzeugen, beispielsweise von Luftfahrzeugen zu simulieren, um etwa in Verbindung mit einer visuellen Computersimulation ein realistisches Bewegungsgefühl zu erzeugen. Dazu ist die die Personen aufnehmende Kapsel um eine oder mehrere kapselfeste Achsen herum bzw. entlang dieser Achsen beweglich gelagert und mittels Verstellantrieben bewegbar.

Bewegungssimulatoren für den professionellen Einsatz, beispielsweise für die Pilotenschulung haben bis zu sechs Freiheitsgrade, d.h. sie ermöglichen Bewegungen um alle drei Achsen eines kapselfesten Achsensystems sowie Verschiebungen längs dieser Achsen. Sie sind darüber hinaus mit äußerst aufwändigen Steuerungen ausgestattet, um nicht nur Lagen und Bewegungen, sondern auch Beschleunigungen und Verzögerungen simulieren zu können. Derartige professionelle Bewegungssimulatoren werden im allgemeinen unter Aufsicht von Bedienungspersonal in eigens dafür vorgesehenen Räumen betrieben, zu denen Unbefugte keinen Zutritt haben, so dass die Gefahr, dass im Bereich der Bewegungssimulatoren sich aufhaltende Personen durch den unvorhersehbare Bewegungen ausführenden Bewegungssimulator verletzt werden, im allgemein nicht besteht.

Daneben sind einfachere Bewegungssimulatoren bekannt, die beispielsweise in Vergnügungsfahrgeschäften oder als Spielgeräte eingesetzt werden. Diese Bewegungssimulatoren führen im allgemeinen einfachere Bewegungen mit weniger Freiheitsgraden aus; dafür kommt insbesondere bei als Spielgeräte eingesetzten Bewegungssimulatoren die Forderung hinzu, dass ein weitgehend unbeaufsichtigter Betrieb möglich sein muss, da sie für ein beliebiges Publikum, insbesondere auch für Kinder, zugänglich sind und ohne Beaufsichtigung betrieben werden.

Aus der US-4856771 ist bereits ein Bewegungssimulator der im Oberbegriff des Anspruches 1 genannten Art bekannt, bei welchem die Kapsel im wesentlichen kugelförmig ausgebildet ist und sich um mehrere raumfeste bzw. kapselfeste Achsen drehen kann, die sich im Mittelpunkt der Kugel schneiden, so dass sich zu keiner Zeit Teile der Kapsel außerhalb des durch die Kugelhülle definierten Raumes bewegen, womit insoweit eine Kollision mit Personen, die sich im Bereich des Bewegungssimulators aufhalten, weitgehend ausgeschlossen ist. Die Kapsel des bekannten Bewegungssimulators kann sich außerdem entlang einer raumfesten vertikalen Achse auf und ab bewegen. Auch dabei bleibt die Kapsel innerhalb eines zylindrischen Bewegungsraumes, dessen Durchmesser dem Durchmesser der Kapsel entspricht. Es sei hier angemerkt, dass im folgenden zwischen einem kapselfesten Achsensystem mit den x-, y- und z-Achsen sowie einem raumfesten Achsensystem mit Längsachse, Querachse und Hochachse unterschieden wird. In der Normalstellung der Kapsel fallen beide Achsensysteme zusammen.

Der bekannte Bewegungssimulator umfasst ein vertikal angeordnetes Ringelement mit einer raumfesten, vertikalen Ringebene und einer dazu rechtwinklig stehenden raumfesten horizontalen Ringachse. Das Ringelement ist über eine in dessen Umfangsbereich angeordnete Drehantriebslagerung um diese Ringachse drehbar gelagert und drehantreibbar. Innerhalb des Ringelementes ist eine kugelförmige Kapsel so angeordnet, dass sie sich um eine zur Ringachse rechtwinklig stehende, kapselfeste Kapselachse drehen kann. In der Normalstellung des Bewegungssimulators liegt die Kapselachse horizontal und die Kapsel ist so ausgerichtet, dass die Kapselinsassen in Richtung der Ringachse blicken. Eine Drehung des Ringelementes um die Ringachse simuliert eine Rollbewegung der Kapsel, während eine Drehung um die Kapselachse eine Nickbewegung simuliert.

Die drehbare Lagerung der Kapsel im Ringelement erfolgt über eine Art Ringkugellager, wobei der innere Lagerring durch die Kapsel selbst bzw. eine die Kapsel meridianartig umgebende Kugellaufspur gebildet wird, während der Außenring durch die diese Kugellaufspur kreuzenden Abschnitte des Ringelementes dargestellt ist. Diese Lagerung ist insbesondere wegen der die gesamte Kapsel umgebenden Kugellaufspur einerseits und wegen der komplizierten Kugelführung in den oben erwähnten Abschnitten des Ringelementes konstruktiv und baulich sehr aufwändig und deshalb teuer. Eine weitere konstruktive Schwierigkeit liegt in der Unterbringung eines Drehantriebes für die Drehung der Kapsel im Ringelement sowie in der Übertragung der Antriebsleistung auf die Kapsel.

### Darstellung der Erfindung

Es ist die Aufgabe der vorliegenden Erfindung, einen Bewegungssimulator der im Oberbegriff des Anspruches 1 genannten Art zu schaffen, welcher insbesondere im Bereich der Drehantriebslagerung der Kapsel im Ringelement sowie der Drehantriebsübertragung konstruktiv und baulich einfacher ist als die Lösung gemäß dem Stand der Technik.

Diese Aufgabe ist erfindungsgemäß durch die im Anspruch 1 beschriebenen Merkmale gelöst.

Diese Lösung sieht vor, dass die zweite Antriebslagerung durch zwei an der Innenseite des Ringelementes diametral einander gegenüberliegende, ringseitige Schwenklagerelemente sowie zwei mit diesen zusammenwirkende, an der Außenseite der Kapsel angeordnete kapselseitige Schwenklagerelemente gebildet ist. Die kapselseitige Schwenklagerelemente sind beispielsweise einfache Schwenkzapfen und die ringseitigen Schwenklagerelemente einfache Lagerbuchsen, in die die Schwenkzapfen eingreifen. Derartige Schwenklager sind konstruktiv und baulich äußerst einfach und preiswert sowie wartungsfreundlich.

Um die Standfestigkeit des Ringelementes insbesondere in Richtung senkrecht zur Ringebene zu verbessern, ist in einer Ausgestaltung der Erfindung vorgesehen, dass das Ringelement aus zwei in Richtung der Ringachse zueinander beabstandeten, miteinander verbundenen Einzelringelementen besteht, die eine verbesserte Abstützbasis bilden.

Das Ringelement kann grundsätzlich als Vollring ausgebildet sein, so dass eine 360°-Drehung um die Ringachse möglich ist. In diesem Fall ist konstruktiv zu beachten, dass die ringseitigen Schwenklagerelemente gegenüber dem eigentlichen Ringelement axial so versetzt sind, dass sie die Drehung des Ringelementes nicht behindern. Im allgemeinen ist jedoch insbesondere für im Vergnügungsfahrgeschäft bzw. als Spielgerät eingesetzte Bewegungssimulatoren eine 360°-Drehung um die Ringachse nicht erforderlich. Es ist deshalb gemäß einer weiteren, bevorzugten Ausgestaltung der Erfindung vorgesehen, dass das Ringelement im wesentlichen halbkreisförmig ist, was zu einer weiteren konstruktiven und baulichen Vereinfachung des Bewegungssimulators führt. Das halbkreisförmige Ringelement erlaubt im wesentlichen eine annähernde 180°-Drehung um die Ringachse, d.h. etwa 90° zu jeder Seite, was für den o.g. Zweck als ausreichend angesehen werden kann.

Das Ringelement kann grundsätzlich stehend angeordnet und in seinem unteren Bereich gehalten sein, oder es kann hängend angeordnet und in seinem oberen Bereich gehalten sein. Daraus ergibt sich für ein halbkreisförmiges Ringelement, dass dieses bei stehender Anordnung nach oben offen und bei hängender Anordnung nach unten offen ist. Bevorzugt wird eine Anordnung, bei der das Ringelement bei einer der Normalstellung der Kapsel entsprechenden Lage nach oben offen und zu einer die Ringachse enthaltenen vertikalen Ebene symmetrisch ist. Eine derartige Anordnung wird anhand eines Ausführungsbeispieles näher beschrieben.

Wenn das Ringelement entsprechend den o.g. Merkmalen halbkreisförmig ist und zwei in Richtung der Ringachse zueinander beabstandete Einzelringelemente umfasst, dann ist gemäß einer weiteren Ausgestaltung der Erfindung vorgesehen, dass die Einzelringelemente an ihren jeweils benachbarten freien Enden mittels Überbrückungsteilen miteinander verbunden sind. Die Überbrückungsteile bilden oder halten dann vorzugsweise die ringseitigen Schwenklagerelemente.

Eine hinsichtlich der Drehantriebsübertragung für das Ringelement besonders günstige Lösung ergibt sich dann, wenn gemäß einer weiteren Ausgestaltung der Erfindung das Ringelement bzw. die Einzelringelemente jeweils als Zahnkränze ausgebildet sind, die mit einem oder mehreren Antriebszahnrädern der ersten Drehantriebslagerung im Eingriff sind, wobei die Antriebszahnräder ihrerseits mit einem geeigneten Drehantrieb gekoppelt sind.

In einer weiter bevorzugten Ausgestaltung der Erfindung ist vorgesehen, dass das Ringelement bzw. die Einzelringelemente jeweils eine Außenverzahnung und eine Innenverzahnung aufweisen, in die Außenzahnräder bzw. Innenzahnräder der ersten Drehantriebslagerung eingreifen. In einer bevorzugten Ausführung weist die erste Drehantriebslagerung wenigstens zwei zueinander beabstandete Getriebeböcke jeweils mit einem in die Außenverzahnung eingreifenden Außenzahnrad und einem in die Innenverzahnung eingreifenden Innenzahnrad auf, so dass das zugeordnete Ringelement bzw. Einzelringelement zwischen dem Außenzahnrad und dem Innenzahnrad hindurch läuft und durch diese sicher geführt und angetrieben wird. Dabei dienen die jeweils unteren Zahnräder als Stützräder zur Aufnahme des Gewichtes des Ringelementes und der damit verbundenen Bauteile.

Wie weiter vome bereits beschrieben wurde, sind die Schwenklagerelemente vorzugsweise Gleitlagerelemente, d.h. sie bestehen aus einer Gleitlagerbuchse und einem Gleitlagerzapfen.

Um dem Bewegungssimulator einen weiteren Freiheitsgrad der Bewegung zu geben, ist in einer weiteren Ausgestaltung der Erfindung vorgesehen, dass die erste Drehantriebslagerung für das gesamte Ringelement auf einer Plattform angeordnet ist, die mittels einer Hubeinrichtung in Richtung einer raumfesten vertikalen Achse verstellbar ist. Ein weiterer Freiheitsgrad der Bewegung kann in einfacher Weise dadurch verwirklicht werden, dass diese Plattform außerdem um eine durch das Zentrum der Kapsel laufende vertikale Achse, vorzugsweise die o.g. raumfeste vertikale Achse drehbar ist.

Wie bereits in der Beschreibungseinleitung erwähnt wurde, hat die Kapsel im wesentlichen die Form einer Kugel, wobei die erwähnten Bewegungsachsen vorzugsweise durch den Mittelpunkt dieser Kugel verlaufen.

Um die Gefahr einer Verletzung von Personen, die sich im Bereich des Bewegungssimulators aufhalten, weiter zu verringern, ist gemäß einer weiteren Ausgestaltung der Erfindung vorgesehen, dass die erste Drehantriebslagerung für das Ringelement unterhalb einer begehbaren Bodenplatte angeordnet ist, so dass Personen keinen Zugang zu dieser Drehantrieblagerung haben.

Die zweite Drehantriebslagerung zur Drehung der Kapsel gegenüber dem Ringelement umfasst vorzugsweise einen direkt mit einem der kapselseitigen Schwenklagerelemente gekoppelten Antriebsmotor, welcher im Falle eines Elektromotors dann über flexible Leitungen mit Strom versorgt wird.

Um in diesem Fall eine Kollision des Antriebsmotors mit Personen, die sich im Bereich des Bewegungssimulators aufhalten, auszuschließen, ist gemäß einer weiteren Ausgestaltung der Erfindung der Schwenkbereich zumindest dieses Antriebsmotors mittels einer Schutzverkleidung abgedeckt, wie anhand eines Ausführungsbeispieles genauer dargelegt wird.

Um beispielsweise bei einem als Fahrzeugsimulator eingesetzten Bewegungssimulator Fahrstöße aus Fahrbahnunebenheiten besser simulieren zu können, ist in einer weiteren Ausgestaltung in der Kapsel ein Unwuchtantrieb in der Kapsel vorgesehen.

### Kurze Beschreibung der Zeichnungen

Mehrere Ausgestaltungen der Erfindung sind in der Zeichnung dargestellt und im Folgenden näher beschrieben. Es zeigen:
- Fig. 1: schematisch einen Bewegungssimulator mit zwei Freiheitsgraden der Bewegung in einer Vorderansicht;
- Fig. 2: einen Bewegungssimulator etwa gemäß der Fig. 1 in einer Seitenansicht;
- Fig. 3: einen Bewegungssimulator etwa entsprechend der Fig. 1 jedoch mit einer hängenden Anordnung;
- Fig. 4: einen Bewegungssimulator mit zusätzlichen Freiheitsgraden der Bewegung. in einer perspektivischen Darstellung

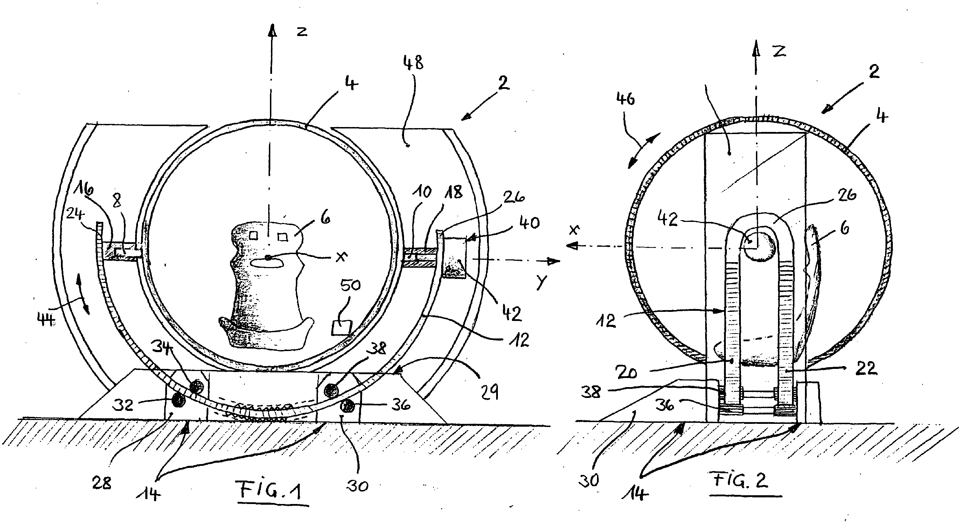

Der in den Figuren 1 und 2 dargestellte Bewegungssimulator 2 umfasst eine im wesentlichen kugelförmige Kapsel 4 mit einem im Inneren angeordneten Sitz 6 zur Aufnahme einer Person. Die Kapsel 4 ist über an deren Außenseite angeordnete, einander diametral gegenüberliegende kapselseitige Schwenklagerelemente 8 und 10 um die kapselfeste y-Achse drehbar an einem Ringelement 12 gelagert, welches seinerseits um eine zur y-Achse senkrecht stehende raumfeste Längsachse drehantreibbar in einer als Ganzes mit 14 bezeichneten ersten Drehantriebslagerung gelagert ist. An der Innenseite des Ringelementes 12 sind an zwei diametral einander gegenüberliegenden Stellen ringseitige Schwenklagerelemente 16, 18 angeordnet, welche mit den kapselseitigen Schwenklagerelemente 8 und 10 zusammenwirken. Im dargestellten Ausführungsbeispiel sind die kapselseitigen Schwenklagerelemente 8 und 10 beispielsweise als Gleitlagerzapfen ausgebildet, und die ringseitigen Schwenklagerelemente 16 und 18 dementsprechend als Gleitlagerhülsen.

Der Drehantrieb des Ringelementes 12 erfolgt über die erste Drehantriebslagerung 14. Wie die Figuren 1 und 2 zeigen, ist das Ringelement 12 im wesentlichen halbkreisförmig ausgebildet und umfasst zwei in Richtung der x-Achse zueinander beabstandete Einzelringelemente 20 und 22, die jeweils eine Außenverzahnung und eine Innenverzahnung haben. Die Einzelringelemente 20 und 22 sind jeweils über an ihren freien Enden angeordnete Überbrückungsteile 24 und 26 miteinander zu einem integralen Ringelement verbunden.

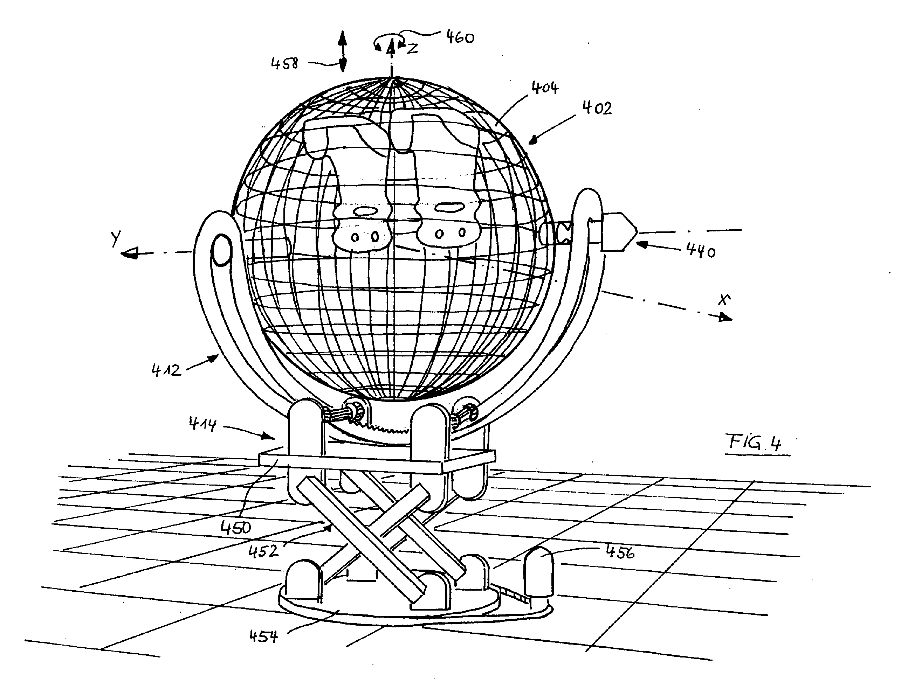

Die erste Drehantriebslagerung 14 umfasst zwei in Richtung der y-Achse beabstandete Getriebeböcke 28, 30, an denen jeweils zwei Zahnräder 32, 34 bzw. 36, 38 angeordnet sind, von denen das jeweils untere in die Außenverzahnung und das jeweils obere in die Innenverzahnung des Ringelementes 12 eingreifen. Figur 1 zeigt die dem Betrachter zugewandten und deshalb sichtbaren, dem vorderen Einzelringsegment 20 zugeordneten Getriebeböcke; entsprechende Getriebeböcke und Zahnräder sind dem hinteren, dem Betrachter abgewandten Einzelringsegment 22 zugeordnet, wie etwa der Figur 4 zu entnehmen ist. Jeweils eines der beschriebenen Zahnräder 32 bis 38, vorzugsweise aber mehrere oder alle Zahnräder sind mit einem Drehantriebsmotor verbunden und übertragen ihre Drehung auf das Ringelement 12. Der Drehantriebsmotor ist in den Figuren aus Gründen einer besseren Übersichtlichkeit nicht dargestellt.

Es sei an dieser Stelle erwähnt, dass die jeweils unteren Zahnräder 32 und 36 der ersten Drehantriebslagerung 14 jeweils so ausgelegt sind, dass sie das Gewicht des Ringelementes 12 und aller dieses Ringelement 12 belastenden Teile, etwa der Kapsel 4 mit Insassen, abstützen können.

Die zweite Drehantriebslagerung 40 für die drehantreibbare Lagerung der Kapsel 4 gegenüber dem Ringelement 12 umfasst einen an der Außenseite des Ringelementes 12 im Bereich 1 der Schwenklager angeordneten Drehantriebsmotor 42, dessen Ausgangswelle direkt mit dem kapselseitigen Schwenklagerelement 10 gekoppelt ist.

Die Funktion des in den Figuren 1 und 2 dargestellten Bewegungssimulators ist wie folgt:

Um eine Rollbewegung beispielsweise eines Flugzeuges zu simulieren, kann das Ringelement 12 über die erste Drehantriebslagerung 14 um die raumfeste Längsachse (Ringachse) in Richtung des Doppelpfeiles 44 verschwenkt werden. Auf diese Weise wird eine Rollbewegung der Kapsel 4 simuliert. Im dargestellten Ausführungsbeispiel ist eine Rollbewegung von etwa 90° in beiden Richtungen möglich. Bei der in den Figuren 1 und 2 gezeigten Normalstellung der Kapsel 4 entspricht diese Rollbewegung um die raumfeste Längsachse exakt einer Rollbewegung um eine hier nicht dargestellte, mit der raumfesten Längsachse zusammenfallende kapselfeste x-Achse. Bei einer um die y-Achse verschwenkten Kapsel 4 beschreibt die kapselfeste x-Achse einen Kegel mit der Längsachse als Kegelachse.

Um eine Nickbewegung der Kapsel 4 zu simulieren, wird die Kapsel 4 mittels der zweiten Drehantriebslagerung 40 um die kapselfeste y-Achse in Richtung des Doppelpfeiles 46 gedreht. Da die y-Achse kapselfest ist, entspricht diese Nickbewegung in jedem Fall exakt einer Nickbewegung um die Querachse beispielsweise eines zu simulierenden Flugzeuges.

Wenn die Kapsel 4 einen bestimmten Nickwinkel einnimmt, dann entspricht die kapselfeste x-Achse der Kapsel nicht mehr der raumfesten Längsachse, wie ausgeführt wurde, so dass dann eine Rollbewegung um die Längsachse eine angenäherte Simulation der Rollbewegung eines zu simulierenden Flugzeuges darstellt.

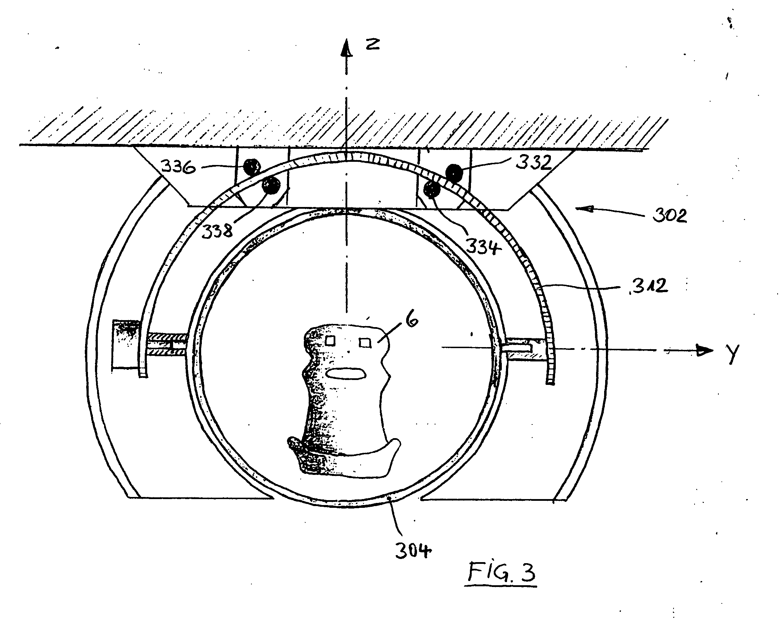

In Fig. 3 ist zu erkennen, dass die erste Drehantriebslagerung 14 unterhalb einer begehbaren Bodenplatte 29 angeordnet und damit für Personen unzugänglich ist. Mit 48 ist eine Verkleidung bezeichnet, mit der das um die Längsachse verschwenkbare Ringelement 12 und insbesondere der darüber hinausstehende Antriebsmotor 42 abgedeckt ist.

Um Böen oder Fahrbahnstöße zu simulieren, ist in der Kapsel 4 ein Unwuchtantrieb 50 vorgesehen.

Fig. 3 zeigt einen Bewegungssimulator 302, welcher in allen wesentlichen Einzelheiten dem in Fig. 1 dargestellten Bewegungssimulator 2 entspricht. Im Unterschied dazu ist bei dem Bewegungssimulator 302 jedoch das Ringelement 312 hängend angeordnet, d.h. dieses ist bei der in Fig. 3 dargestellten Normallage der Kapsel 304 nach unten offen. In diesem Fall sind die inneren Zahnräder 334 und 338 so ausgelegt, dass sie das Gewicht des Ringelements 312 und aller damit verbundenen Teile aufnehmen können. Ansonsten sind mit dem in Figur 3 dargestellten Bewegungssimulator 302 die gleichen Bewegungen möglich, wie mit dem in den Figuren 1 und 2 dargestellten Bewegungssimulator 2.

Fig. 4 zeigt in einer perspektivischen Ansicht einen Bewegungssimulator 402 etwa gemäß den Figuren 1 und 2 mit einer kugelförmigen Kapsel 404, die über eine Drehantriebslagerung 440 um die kapselfeste y-Achse drehbar in einem Ringelement 412 gelagert ist. Das Ringelement 412 ist seinerseits über eine Drehantriebslagerung 414 um die raumfeste Längsachse drehbar und antreibbar gelagert. Das Ringelement 412 ist als stehendes, in der Normallage der Kapsel 404 nach oben offenes Ringelement ausgebildet. Damit entspricht die Anordnung der Figur 4 insoweit exakt der Anordnung gemäß den Figuren 1 und 2.

Die Drehantriebslagerung 414 ist auf einer Plattform 450 angeordnet, die mittels einer im vorliegenden Ausführungsbeispiel als mechanische Schere ausgebildeten Hubeinrichtung 452 in Richtung der raumfesten Hochachse heb-und senkbar ist.

Die Hubeinrichtung 452 ist ihrerseits auf einer um die raumfeste Hochachse drehbaren Grundplatte 454 angeordnet, die mittels eines Drehantriebsmotors 456 und einer Antriebsriemenverbindung drehangetrieben werden kann.

Mittels der beschriebenen Einrichtungen gewinnt der Bewegungssimulator 402 zwei weitere Freiheitsgrade der Bewegung, nämlich eine translatorische Bewegung in Richtung des Doppelpfeiles 458 und eine Drehbewegung in Richtung des Doppelpfeiles 460. Die Drehbewegung 460 entspricht bei einer Normallage der Kapsel 404 einer Gierbewegung um eine kapselfeste z-Achse. Da die Hochachse raumfest ist, stellt eine Drehung des Bewegungssimulators um diese z-Achse für den Fall, dass die Kapsel 404 aus der Normallage um die Längsachse und oder um die y-Achse verschwenkt ist, eine angenäherte Bewegungssimulation um eine kapselfeste z-Achse dar.

## Patentansprüche

1. Bewegungssimulator mit einer zur Aufnahme von Personen bestimmten Kapsel, umfassend ein vertikal angeordnetes Ringelement, welches in einer in einem Umfangsbereich des Ringelementes angeordneten ersten Drehantriebslagerung lagert und um die Ringachse drehantreibbar ist, und eine dem Ringelement zugeordnete zweite Drehantriebslagerung, über die die Kapsel in dem Ringelement um eine zur Ringachse rechtwinklig stehende, in der Ringebene liegende Achse drehbar gelagert und drehantreibbar ist, **dadurch gekennzeichnet, dass** die zweite Drehantriebslagerung (40) durch zwei an der Innenseite des Ringelementes (12) diametral einander gegenüberliegende ringseitige Schwenklagerelemente (16, 18) sowie zwei mit diesen zusammenwirkende, an der Außenseite der Kapsel (4) angeordnete kapselseitige Schwenklagerelemente (8, 10) gebildet ist.

2. Bewegungssimulator nach Anspruch 1, **dadurch gekennzeichnet, dass** das Ringelement (12) zwei in Richtung der Ringachse zueinander beabstandete, miteinander verbundene Einzelringelemente (20, 22) umfasst.

3. Bewegungssimulator nach Anspruch 1 oder 2, **dadurch gekennzeichnet, dass** das Ringelement (12) im wesentlichen halbkreisförmig ist.

4. Bewegungssimulator nach Anspruch 3, **dadurch gekennzeichnet, dass** das Ringelement (12) in einer der Normalstellung der Kapsel (4) entsprechenden Lage nach oben offen und zu einer die Ringachse enthaltenden vertikalen Ebene symmetrisch ist.

5. Bewegungssimulator nach einem der Ansprüche 3 oder 4, mit zwei halbkreisförmigen Einzelringelementen (20, 22), **dadurch gekennzeichnet, dass** die Einzelringelemente (20, 22) an ihren jeweils benachbarten freien Enden mittels Überbrückungsteilen (24, 26) miteinander verbunden sind.

6. Bewegungssimulator nach Anspruch 5, **dadurch gekennzeichnet, dass** die Überbrückungsteile (24, 26) jeweils die ringseitigen Schwenklagerelemente (16, 18) halten.

7. Bewegungssimulator nach einem der Ansprüche 2 bis 6, **dadurch gekennzeichnet, dass** das Ringelement (12) bzw. die Einzelringelemente (20, 22) jeweils als Zahnkränze ausgebildet sind, die mit einem oder mehreren Antriebszahnrädem (32, 34, 36, 38) der ersten Drehantriebslagerung (14) im Eingriff sind.

8. Bewegungssimulator nach Anspruch 7, **dadurch gekennzeichnet, dass** das Ringelement (12) bzw. die Einzelringelemente (20, 22) jeweils eine Außenverzahnung und eine Innenverzahnung aufweisen, in die Außenzahnräder (32, 36) bzw. Innenzahnräder (34, 38) der ersten Drehantriebslagerung (14) eingreifen.

9. Bewegungssimulator nach Anspruch 8, **dadurch gekennzeichnet, dass** die erste Drehantriebslagerung (14) wenigstens zwei zueinander beabstandete Getriebeböcke (28, 30) jeweils mit einem in die Außenverzahnung eingreifenden Außenzahnrad (32, 36) und einem in die Innenverzahnung eingreifenden Innenzahnrad (34, 38) aufweist.

10. Bewegungssimulator nach Anspruch 1, **dadurch gekennzeichnet, dass** die jeweils unteren Zahnräder (32, 36) als Stützräder zur Aufnahme des Gewichtes des Ringelementes (12) und der damit verbundenen Bauteile ausgebildet sind.

11. Bewegungssimulator nach einem der Ansprüche 1 bis 10, **dadurch gekennzeichnet, dass** die Schwenklagerelemente (8, 10; 16, 18) Gleitlager bilden.

12. Bewegungssimulator nach einem der Ansprüche 1 bis 12, **dadurch gekennzeichnet, dass** die erste Drehantriebslagerung (414) fürdas Ringelement (412) auf einer Plattform (450) angeordnet ist, die mittels einer Hubeinrichtung (452) in Richtung einer vertikalen Achse (Z-Achse) verstellbar ist.

13. Bewegungssimulator nach Anspruch 12, **dadurch gekennzeichnet, dass** die Plattform (450) eine durch das Zentrum der Kapsel (404) verlaufende vertikale Achse (Z-Achse) aufweist.

14. Bewegungssimulator nach einem der Ansprüche 1 bis 13, **dadurch gekennzeichnet, dass** die Kapsel (4, 304, 404) im wesentlichen die Form einer Kugel hat.

15. Bewegungssimulator nach einem der Ansprüche 1 bis 14, **dadurch gekennzeichnet, dass** die erste Drehantriebslagerung (14) unterhalb einer begehbaren Bodenplatte (29) angeordnet ist.

16. Bewegungssimulator nach einem der Ansprüche 1 bis 15, **dadurch gekennzeichnet, dass** die zweite Drehantriebslagerung (40) einen direkt mit einem an die kapselseitigen Schwenklagerelemente (10) gekoppelten Antriebsmotor (42) umfasst.

17. Bewegungssimulator nach Anspruch 16, **dadurch gekennzeichnet, dass** zumindest der Schwenkbereich des Antriebsmotors (42) mittels einer Schutzverkleidung (48) abgedeckt ist.

18. Bewegungssimulator nach einem der Ansprüche 1 bis 17, **dadurch gekennzeichnet, dass** in der Kapsel (4) ein Unwuchtantrieb (50) zur Simulation von Fahrstößen oder dergleichen angeordnet ist.
